# EUROPÄISCHE PATENTANMELDUNG

(11) **EP 3 744 796 A1**
(43) Veröffentlichungstag der Anmeldung: **02.12.2020**
(21) Anmeldenummer: 19176961.1
(22) Anmeldetag: 28.05.2019
(51) Int. Cl.: C09D 5/08, B05D 7/00, C09D 5/24, F24D 19/00, C09D 161/04, B05D 5/12

(54) **BESCHICHTUNGSSYSTEM**

(71) Anmelder: voestalpine Stahl GmbH, 4020 Linz (AT); Rettig ICC B.V., 6199 AA Maastricht-Airport (NL)
(72) Erfinder: Stellnberger, Karl-Heinz, 4020 Linz (DE); Naumann, Jens, 08451 Crimmitschau (DE); Kristina, Rein, 48565 Steinfurt (DE)
(74) Vertreter: Wildhack & Jellinek

(57) **Zusammenfassung**

Die Erfindung betrifft ein Beschichtungssystem für Bleche, ein mit dem Beschichtungssystem beschichtetes Blech, ein Verfahren zur Beschichtung von Blechen, sowie einen Hohlkörper mit einem Beschichtungssystem und ein Verfahren zur Herstellung eines Hohlkörpers. Erfindungsgemäß ist ein Beschichtungssystem umfassend eine Grundierungsschicht umfassend zumindest einen Filmbildner und zumindest einen Korrosionsinhibitor, und eine unmittelbar auf der Grundierungsschicht angeordnete Deckschicht umfassend zumindest einen Filmbildner und zumindest einen Leitpartikel vorgesehen. Das Beschichtungssystem ist korrosionsbeständige, schweißgeeignete und umformbar, insbesondere auch bei erhöhten Betriebstemperaturen, in feuchter Umgebung und über längere Zeiträume.

## Beschreibung

Die Erfindung betrifft ein korrosionsbeständiges und schweißgeeignetes Beschichtungssystem für Bleche. Umfasst sind weiters ein derart beschichtetes Blech, ein Verfahren zur Beschichtung eines Blechs, sowie Hohlkörper aus einem beschichteten Blech.

Offene Heizungssysteme sind im asiatischen und russischen Raum verbreitet. Sie sind dadurch gekennzeichnet, dass es keinen Wärmetauscher zwischen der Wärmeerzeugung im Heizkraftwerk und den Wärmeverbrauchern im Gebäude gibt, sondern dass direkt das erhitzte Wasser den Heizkörper erwärmt. Wasser, das durch Leckagen oder Verdunstung verloren geht, wird nachgefüllt. Im Sommer wird das Wasser für Reparaturarbeiten abgelassen. Dadurch kommt stetig frisches, sauerstoff- und kalkhaltiges Wasser in die Heizkörper, was eine starke korrosive Belastung darstellt. Daher kommen bisher massige gusseiserne Heizkörper mit entsprechenden Wanddicken zum Einsatz, die nach etwa 7 bis 10 Jahren durchrosten und dann ausgetauscht werden müssen. Die in Europa üblichen leichten, günstigen Flachheizkörper sind für geschlossene Heizungssysteme mit geringer korrosiver Belastung ausgelegt und rosten in offenen Systemen nach 2 bis 3 Jahren durch.

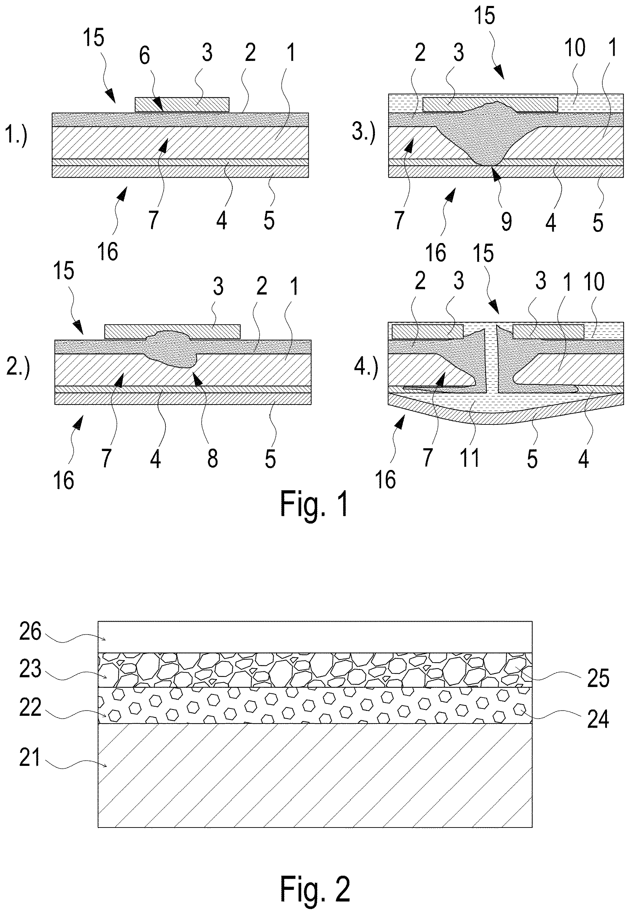

In offenen Heizungssystemen kommt es somit zu einem raschen Verschleiß der Heizkörper durch Korrosion. Dafür ist zum einen der hohe Sauerstoffeintrag in das offene System verantwortlich. Ein weiterer Faktor sind Kalkablagerungen, wenn unaufbereitetes Wasser im Heizungssystem verwendet wird. Das nicht aufbereitete Heizungswasser stellt zudem einen Elektrolyten dar. Unterhalb der Kalkablagerungen bildet sich eine Anode, die eine Spaltkorrosion fördert. Dadurch kommt es in weiterer Folge zu einer Lochbildung, die überraschend vom Inneren des Heizkörpersystems ausgeht. Der hauptsächliche Korrosionsmechanismus ist in Fig. 1 zusammengefasst.

Dieser Korrosionsmechanismus tritt in Systemen auf, in denen kalkhaltiges Wasser Verwendung findet, wobei gleichzeitig ein hoher Sauerstoffeintrag stattfindet. Verstärkt wird dieser Effekt, wenn im System Temperaturen über ca. 35 °C erreicht werden. Diese Bedingungen treten beispielsweise auch in Niederdruckdampfsystemen auf.

Beschichtungen für offene Heizkörpersysteme oder Niederdruckdampfsysteme benötigen daher eine besonders gute Korrosionsbeständigkeit. Gleichzeitig ist es erforderlich, dass die Beschichtung schweißgeeignet ist. Für die Verbindung der Bleche ist es wichtig, dass das Beschichtungssystem zum Punkt-, Rollnaht-, und Induktionsschweißen geeignet ist. Ein Beschichtungssystem gilt dann als gut schweißgeeignet, wenn unter Beachtung qualitativer und wirtschaftlicher Gesichtspunkte eine den Anforderungen genügende Schweißung hergestellt werden kann. Dies kann beispielsweise daran festgestellt werden, dass die Schweißpunkte dicht sind und dass keine Schweißspritzer auftreten. Beim Widerstandspunktschweißen ist ein weiteres mögliches Kriterium der Durchmesser des Schweißpunktes. Eine gute Schweißeignung ist auch für die Durchführung von Wartungsarbeiten wichtig. Korrosionsschutz und Schweißeignung sind gegenläufige Anforderungen. Eine dickere Beschichtung verbessert den Korrosionsschutz, verschlechtert aber die Schweißeignung enorm. Eine dünne Beschichtung ist besser schweißgeeignet, bietet aber nur ungenügenden Korrosionsschutz. Um eine gute Schweißeignung zu gewährleisten ist es notwendig, die Schichtdicke sowie die Schichteigenschaften einer Beschichtung einzustellen. Dies kann nur dann zuverlässig und überprüfbar erzielt werden, wenn die Beschichtung vor Herstellung der Hohlkörper definiert aufgebracht wird. Es ist daher weiters notwendig, dass Beschichtungen für Hohlkörper, insbesondere für teilweise stark gekrümmte Hohlkörper, wie Heizkörper, eine gute Umformbarkeit aufweisen, um die Herstellung der Hohlkörper nach Aufbringen der Beschichtung zu ermöglichen. Eine entsprechende Beschichtung muss daher dem Umformen bzw. Prägen der verwendeten Bleche standhalten.

Bekannte Beschichtungssysteme können den Anforderungen in solchen Systemen nicht gerecht werden.
Eine schweißgeeignete Beschichtung mit Korrosionsschutz ist beispielsweise in der WO 2007/120430 beschrieben. Darin wird eine Zusammensetzung enthaltend Leitpartikel und Korrosionsinhibitoren im Verhältnis von 1:8 - 12:1 gezeigt. Die Umformbarkeit und die Schweißeignung dieser Zusammensetzung ist jedoch nicht ausreichend für die Herstellung von Heizkörpern.

Weiters sind korrosionsbeständige Beschichtungssysteme aus der Automobilindustrie bekannt. Die WO 2008/080746 zeigt beispielsweise eine schweißgeeignete und umformbare Zusammensetzung. Offenbart wird darin ein Blech mit einem Schichtsystem enthaltend eine Konversionsschicht und eine Schicht mit einer Dicke von 0,5 - 2,5 µm umfassend einen Filmbildner, vorzugsweise auf Urethanharz-Basis, sowie 2 - 25 Gew.% eines Leitpigments mit einem spezifischen Gewicht von max. 3 g/cm³, wobei max. 5 Gew.% Leitpigment mit einem spezifischen Gewicht von mehr als 3 g/cm³ enthalten sein können. Weiters können in der Schicht Korrosionsinhibitoren enthalten sein. Diese Beschichtungssysteme halten jedoch den dauerhaft erhöhten Temperaturen in Heizkörpern nicht stand, da es u.a. durch die Verwendung verzinkter Stahlbleche, bei gleichzeitiger Einwirkung von Wasser und Wärme zu einer gesteigerten Korrosion kommt.

Aufgabe der Erfindung ist es daher, eine korrosionsbeständige, schweißgeeignete und umformbare Beschichtung bereitzustellen, die insbesondere in feuchter Umgebung über längere Zeiträume erhöhten Betriebstemperaturen standhält.

Die Erfindung löst die Aufgabe mit den Merkmalen des Patentanspruchs 1.

Erfindungsgemäß ist ein Beschichtungssystem für Bleche vorgesehen, umfassend eine Grundierungsschicht umfassend zumindest einen Filmbildner und zumindest einen Korrosionsinhibitor, und eine unmittelbar auf der Grundierungsschicht angeordnete Deckschicht umfassend zumindest einen Filmbildner und zumindest einen Leitpartikel.

Die Bereitstellung des Korrosionsinhibitors in der Grundierungsschicht ermöglicht einen effektiven Korrosionsschutz. Korrosionsinhibitoren sind Mittel, die die Korrosionsgeschwindigkeit des Metalls wesentlich verringern. Durch die in der Deckschicht enthaltenen Leitpartikel wird die Schweißeignung erzielt. Leitpartikel sind elektrisch leitfähige Partikel. Durch die Filmbildner wird eine gute Haftung ermöglicht. Weiters kann eine gute Umformbarkeit erreicht werden. Filmbildner bzw. film-formingagents sind makro- oder niedermolekulare organische Stoffe, die in einer Beschichtungszusammensetzung für das Zustandekommen eines zusammenhängenden Films sorgen. Als Schichten werden dabei feste Lagen verstanden, die durch zumindest teilweise Trocknung flüssiger Lacke ausgebildet werden. Falls nicht anders angegeben, beziehen sich daher alle im Folgenden genannten Werte auf die trockenen Schichten. Dabei hat sich gezeigt, dass das Beschichtungssystem umfassend eine Grundierungsschicht und eine Deckschicht eine Abstimmung der Eigenschaften der Schichten ermöglicht und deutlich verbesserte Effekte erzielt werden. Durch das Beschichtungssystem kann daher die Lebensdauer von Hohlkörpern deutlich verlängert werden und der Aufwand für Wartungsarbeiten kann reduziert werden. Das Beschichtungssystem weist eine hohe Korrosionsbeständigkeit sowie eine gute Schweißeignung auf. Auch nach dem Umformen und Schweißen von Blechen kann eine Korrosion effizient verhindert werden.

Folgend werden weitere vorteilhafte Ausgestaltungen näher beschrieben:
Eine besonders gute Schweißeignung kann erzielt werden, wenn die Grundierungsschicht eine Schichtdicke von maximal 10 µm, insbesondere 0,5 µm - 4 µm, vorzugsweise 1 µm - 2 µm, aufweist.

Für die Verwendung in offenen Heizkörpersystemen ist besonders geeignet, wenn die Grundierungsschicht als Korrosionsinhibitor zumindest ein Korrosionsschutzpigment enthält, insbesondere Zinkphosphat und/oder ein ionenausgetauschtes, vorzugsweise Calcium-lonenausgetauschtes, Kieselsäure- bzw. Silica-Pigment. Eine Korrosion kann so besonders effektiv verhindert werden.

Dieser Effekt kann verstärkt werden, wenn die Grundierungsschicht 3 Gew. % - 60 Gew. % bezogen auf die Grundierungsschicht, insbesondere 5 Gew. % - 40 Gew. %, vorzugsweise 10 Gew. % - 20 Gew. %, Korrosionsinhibitor umfasst. Einer Korrosion kann so besonders gut vorgebeugt werden.

Die Grundierungsschicht ist vorzugsweise frei von Leitpartikeln. Dadurch kann eine besonders gute Abstimmung zwischen Korrosionsinhibition und Schweißbarkeit erzielt werden.

Es kann vorgesehen sein, dass die Grundierungsschicht als Filmbildner ein, insbesondere cyanidisch vernetztes, Polymersystem auf Basis eines Phenolharzes enthält, wobei zusätzlich ein Epoxidharz und/oder ein Melaminharz, umfasst ist. Phenolharz liefert die benötigte Härte, Stabilität, Temperatur- und Wasserbeständigkeit. Epoxidharz und Melaminharz sind weich und ermöglichen eine gute Umformbarkeit des Beschichtungssystems. Dadurch wird zum einen eine besonders gute Haftung der Grundierungsschicht erzielt, während gleichzeitig eine besonders gute Umformbarkeit gegeben ist.

Um eine gute Korrosionsbeständigkeit bei gleichzeitig guter Schweißeignung zu erzielen, kann vorgesehen sein, dass die Deckschicht eine Schichtdicke von maximal 10 µm, insbesondere 0,5 µm - 4 µm, vorzugsweise 1 µm - 2 µm, aufweist.

Es ist vorteilhaft, wenn das Beschichtungssystem umfassend die Grundierungsschicht und die Deckschicht eine Dicke von 1 µm - 20 µm, insbesondere 1,5 µm - 6 µm, aufweist. Dadurch kann eine besonders gute Abstimmung zwischen Korrosionsbeständigkeit und Schweißeignung erreicht werden.

Die Schweißeignung des Beschichtungssystems kann verbessert werden, wenn die Deckschicht kohlenstoffhaltige Leitpartikel enthält bzw. aufweist. Insbesondere kann vorgesehen sein, dass Graphit verwendet wird. Graphit weist neben einer guten Schweißeignung auch eine weiche Struktur auf, und bewirkt dadurch einen guten Schmiereffekt beim Umformen. Weiters kann Graphit als Mikro-Kathode wirken und einer Korrosion unter möglicherweise vorhandenen Kalkablagerungen vorbeugen. Die Schweißeignung ist besonders gut, wenn Graphit mit einer Korngröße von d100 < 10µm verwendet wird. Das bedeutet, dass die Korngrößen aller Graphitpartikel kleiner als 10 µm sind.

Durch eine Abstimmung der Korngröße des Leitpigments auf die Schichtdicke der Deckschicht, kann die Schweißeignung weiter verbessert werden. Wenn ein Teil der Leitpigmente über das Niveau des Filmbildners nach außen über die Oberfläche des Beschichtungssystems hinausragt, ist die Schweißeignung verbessert. Es kann daher vorgesehen sein, dass die Deckschicht Graphit mit einer Korngröße von d100 < 10 µm und eine Schichtdicke von maximal 10 µm aufweist.

Um die Schweißeignung zu verbessern, kann vorgesehen sein, dass die Deckschicht 1 Gew. % - 40 Gew. % bezogen auf die Deckschicht, insbesondere 2 Gew. % - 30 Gew. %, vorzugsweise 3 Gew. % - 15 Gew. %, Leitpartikel enthält. Überraschenderweise kann sich die Schweißeignung trotz erhöhter Zugabe verschlechtern, hierbei wird vermutet, dass aufgrund der Bildung von mehreren Strompfaden durch das Schichtsystem sich ungünstige Stromverteilungsverhältnisse ergeben können. Andererseits ergibt sich die untere Grenze von 1% aufgrund der Mindestleitfähigkeit des Beschichtungssystems.

Um eine besonders gute Haftung auf der Grundierungsschicht sowie eine besonders gute Umformbarkeit zu erreichen, kann vorgesehen sein, dass die Deckschicht als Filmbildner ein, insbesondere cyanidisch vernetztes, Polymersystem auf Basis eines Phenolharzes umfasst, wobei zusätzlich ein Epoxidharz und/oder ein Melaminharz, umfasst ist. Das relativ harte Phenolharz bildet einen sehr dichten Film, der das Beschichtungssystem besonders wasserbeständig macht. Phenolharz ist zudem temperaturbeständig. Epoxidharz und Melaminharz sind weich und ermöglichen eine gute Umformbarkeit des Beschichtungssystems. Weiters ist dieses Polymersystem sehr unpolar und daher sehr beständig gegen Wasser und Kalkablagerungen.

Versuche haben gezeigt, dass aufeinander abgestimmte Filmbildner von Grundierungsschicht und Deckschicht zu einer besseren Haftung und somit zu einer verbesserten Umformbarkeit eines mit dem Beschichtungssystem beschichteten Blechs führen. Vorzugsweise werden die Grundierungsschicht und die Deckschicht dabei nach Trocknung von organische Lösungsmittel enthaltenden Flüssiglacken, also durch Trocknung der Grundierung und des Decklacks, gebildet.

Um einer Anhaftung von Kalk noch besser vorbeugen zu können, kann vorgesehen sein, dass die Deckschicht ein Hydrophobierungsmittel umfasst, insbesondere ein oder mehrere Verbindungen ausgewählt aus der Gruppe der Siloxane, vorzugsweise mitvernetzende Siloxane. Vorteilhaft ist es insbesondere, wenn das Hydrophobierungsmittel in einer Menge von 0,1 Gew. % - 10 Gew. % bezogen auf die Deckschicht enthalten ist. Dadurch kann der Anhaftung von Kalk und damit einer Korrosion noch besser vorgebeugt werden.

Um die Haftung der Grundierungsschicht zu verbessern, kann vorgesehen sein, dass unter der Grundierungsschicht, insbesondere direkt auf dem zu beschichtenden Blech, eine, insbesondere chromfreie, Konversionsschicht angeordnet ist. Die Konversionsschicht kann durch ihre Rauheit die aktive Oberfläche vergrößern und somit zu einer besseren mechanischen Anbindung des Beschichtungssystems bzw. der Grundierungsschicht führen. Die Bindung kann auch verbessert werden, indem die Grundierungsschicht mit funktionellen Gruppen an der Oberfläche der Konversionsschicht reagiert. Je nach Art der Konversionsschicht kann sie wenige Atomlagen bis einige 100 nm dick sein. Eine Konversionsbehandlung bezeichnet in der Oberflächentechnik die physikalische und/oder chemische Vorbehandlung von Oberflächen, insbesondere metallischer Oberflächen, bevor diese lackiert oder verklebt werden. In der Vergangenheit wurden häufig Konversionssichten auf der Basis von Chrom(VI)-oxid erzeugt, das sogenannte Chromatieren. Dies kommt aufgrund strenger gesetzlicher Vorgaben immer seltener zum Einsatz. Alternativen zum klassischen Chromatieren sind Behandlungen auf der Basis von Chrom(III)-oxid oder komplexen Fluoriden (Titan-, Zirconiumverbindungen). Eine weitere Möglichkeit zum Erzeugen einer Konversionsschicht ist das Phosphatieren mittels wässrigen Phosphat-Lösungen. Alternativ kann dieser Vorbehandlungsschritt auch in die Grundierung eingebunden sein (sogenannte Pretreatment-Primer).

Weiters kann vorgesehen sein, dass direkt auf der Deckschicht eine Versiegelungsschicht angeordnet ist, wobei die Versiegelungsschicht zumindest einen Filmbildner umfasst. Vorteilhaft ist es insbesondere, wenn die Versiegelungsschicht als Filmbildner ein, insbesondere cyanidisch vernetztes, Polymersystem auf Basis eines Phenolharzes umfasst, wobei zusätzlich ein Epoxidharz und/oder ein Melaminharz und/oder ein Polyesterharz, umfasst. Die Versiegelungsschicht weist dabei eine gute Haftung sowohl auf der Deckschicht und der Grundierungsschicht auf, als auch auf unbeschichtetem oder konversionsbehandeltem Metall-, bzw. Stahlband.

Auf diese Weise können möglicherweise, z.B. bei einer Umformung, entstandene Beschädigungen des Beschichtungssystems vor Korrosion geschützt werden. Dieser Effekt kann zudem verstärkt werden, wenn die Versiegelungsschicht einen Korrosionsinhibitor aufweist, insbesondere Zinkphosphat und/oder ein ionenausgetauschtes, vorzugsweise Calcium-lonenausgetauschtes, Kieselsäure- bzw. Silica-Pigment.

Vorzugsweise wird die Versiegelungsschicht durch Trocknung eines wasserbasierten Flüssiglacks bzw. Versiegelungslacks, im Weiteren als Versiegelung bezeichnet, gebildet. Wenn Wasser als Lösemittel verwendet wird, ist der Umgang mit der Beschichtungslösung einfach und sicher für die Arbeiter.

Ein besonders guter Schutz vor Korrosion kann erzielt werden, wenn die Versiegelungsschicht eine Filmdicke von 0,5 µm - 20 µm, insbesondere 3 µm - 20 µm, aufweist.

Zudem kann vorgesehen sein, dass das Beschichtungssystem umfassend die Grundierungsschicht, die Deckschicht und die Versiegelungsschicht eine Filmdicke von 1,5 µm - 30 µm aufweist. Durch zu hohe Schichtdicken kann es zu Eigenspannungen kommen, die zu Schichthaftungsproblemen oder auch einem Aufspringen und damit zu einer Beschädigung des Beschichtungssystems führen könnte.

Besonders vorteilhaft ist ein Beschichtungssystem das aus der Konversionsschicht, der Grundierungsschicht, der Deckschicht und, optional der Versiegelungsschicht, in unmittelbarer Schichtfolge, also ohne Zwischenschichten, besteht.

Erfindungsgemäß ist weiters ein Blech beschichtet mit einem zuvor beschriebenen Beschichtungssystem, wobei das Blech zumindest einseitig beschichtet ist, wobei die Grundierungsschicht dem Blech zugewandt ist. Dieses Blech kann für viele Einsatzzwecke Verwendung finden, bei denen ein guter Korrosionsschutz, eine gute Schweißeignung und eine gute Umformbarkeit vereint werden sollen.

Es kann insbesondere vorgesehen sein, dass das Blech ein, vorzugsweise geglühtes und unverzinktes, Stahlblech ist. Vorzugsweise ist das Blech ein konversionsbehandeltes Stahlband. Stahlblech weist eine besonders gute Beständigkeit und Haltbarkeit auf. Üblicherweise wird verzinktes Blech als Korrosionsschutz verwendet. Verzinktes Stahlblech darf für den Warmwassergebrauch jedoch nicht verwendet werden, da sich das elektrochemische Potential zwischen Zink und Eisen ab 35 °C langsam und ab 60 °C sprunghaft umkehrt, d. h. Zink wird elektrochemisch edler als der Grundwerkstoff Eisen. Aufgrund der Betriebstemperaturen sollte in Heizungssystemen kein verzinktes Stahlblech verwendet werden. Durch die Verwendung von unverzinktem Stahlblech kann vermieden werden, dass es dort zu einer Potentialumkehr des Zinks kommt, die eine Korrosion befördern würde. Durch das erfindungsgemäße Beschichtungssystem kann ein guter Korrosionsschutz auf Stahlblech auch erreicht werden, wenn aufgrund der Anwendungsbedingungen kein verzinktes Stahlband verwendet werden kann.

Erfindungsgemäß ist auch ein Verfahren zur Beschichtung eines Blechs mit einem zuvor beschriebenen Beschichtungssystem im Bandbeschichtungsverfahren, auch Coil-Coating-Verfahren genannt. Dabei wird eine Grundierung zur Ausbildung der Grundierungsschicht und ein Decklack zur Ausbildung der Deckschicht aufgebracht. Dadurch kann die Dicke der Schichten besonders genau, insbesondere über die gesamte Bandbreite und Bandlänge des Coils, eingestellt werden.

Das Coil-Coating-Verfahren ermöglicht eine mehrschichtige Beschichtung eines sich im Banddurchlauf befindlichen unbeschichteten oder konversionsbehandelten Metallbands, insbesondere eines Stahlbandes. Dabei wird zunächst auf eine Flachseite des Metallbandes mithilfe eines Walzenauftrags eine aushärtbare polymere Grundierung zur Ausbildung der Grundierungsschicht aufgetragen. Die Grundierung kann auch als Primer bezeichnet werden. Vorzugsweise enthält die Grundierung ein organisches Lösungsmittel. Nach dem Härten der Grundierung wird auf die Grundierungsschicht mithilfe eines Walzenauftrags ein aushärtbarer polymerer Decklack zur Ausbildung der Deckschicht aufgebracht und gehärtet. Vorzugsweise enthält der Decklack ebenfalls ein organisches Lösungsmittel.

Gegebenenfalls kann vor Auftragung der Grundierung eine, insbesondere chromfreie, beispielsweise Titanfluoride enthaltende, Konversionsschicht aufgebracht werden. Die Konversionsschicht ist vorzugsweise 20 bis 300 nm dick und kann beispielsweise via Chemcoater oder via Spritz-/Quetsch-Verfahren aufgebracht werden. Dadurch kann eine verbesserte Haftung der Grundierungsschicht auf dem Metallband erzielt werden.

Möglich ist auch eine beidseitige Beschichtung eines Metallbandes.

Um die weitere Verarbeitung des Blechs zu erleichtern, ohne die Umformbarkeit zu beeinträchtigen, kann vorgesehen sein, dass im Bandbeschichtungsverfahren die Filmbildner teilvernetzt werden. Die Schichten werden somit nicht vollständig ausgehärtet. Überraschenderweise hat sich gezeigt, dass eine Teilvernetzung gegenüber einer vollständigen Vernetzung der Filmbildner der Grundierungs- und der Deckschicht während des Bandbeschichtungsprozesses von Vorteil ist. Bei Teilvernetzung der Filmbildner ist das dreidimensionale Polymernetzwerk nicht voll entwickelt und ein wesentlicher Anteil der für die Vernetzung geeigneten funktionellen Gruppen liegt unvernetzt vor. Einen Rückschluss auf den Vernetzungsgrad erlaubt die MEK-Beständigkeit.

Der Zahlenwert der MEK-Doppelhub-Beständigkeit ist ein Maß für den Vernetzungsgrad, wobei die Dicke einer Schicht für die MEK-Beständigkeit nur eine sehr untergeordnete Rolle spielt. Die Versuche zur MEK-Beständigkeit wurden gemäß der Norm ÖNORM EN 13523-11 durchgeführt. Diese kann getestet werden, indem ein 1 kg Gewichtsblock mit Methylethylenketon (MEK) getränkter Watte umwickelt wird und über die zu testende organische Beschichtung geführt wird. Die Anzahl an Doppelhüben, die benötigt werden, um die Beschichtung bis zum Sichtbarwerden des metallischen Untergrundes zu entfernen, wird gezählt und ist ein Maß für die Lösungsmittelbeständigkeit. Wenn eine organische Beschichtung vollständig vernetzt ist, erreicht sie einen beschichtungsspezifischen maximalen MEK-Wert. Wird der beschichtungsspezifische maximale MEK-Wert nicht erreicht, ist die organische Beschichtung noch nicht vollständig vernetzt. Durch z.B. einen frühzeitig abgebrochenen Einbrennprozess kann eine Teilvernetzung des Filmbildner erreicht werden.

Insbesondere kann vorgesehen sein, dass das Beschichtungssystem nach dem Bandbeschichtungsverfahren eine MEK-Beständigkeit von 15 - 25 Doppelhüben aufweist, da so die Haftung innerhalb des Beschichtungssystems verbessert wird, ohne die Eigenschaften durch ein Überbrennen negativ zu beeinflussen.

Vorteilhaft ist es dazu, wenn die Grundierungsschicht für 5 s - 40 s, insbesondere 10 s - 30 s, und einer Peak Metal Temperature von 220 °C - 290 °C, insbesondere 230 °C - 270 °C, eingebrannt wird und/oder wobei die Deckschicht für 5 s - 40 s, insbesondere 10 s - 30 s, und einer Peak Metal Temperature von 220 °C - 280 °C, insbesondere 230 °C - 270 °C eingebrannt wird. Die Peak Metal Temperature ist die Maximaltemperatur des Bleches beim Einbrennen während des Bandbeschichtungsverfahrens.

Das Beschichtungssystem aus Grundierungsschicht und Deckschicht kann bei 80 °C - 200 °C für 5 Min. - 25 Min. ausgehärtet werden und erreicht dann eine MEK-Beständigkeit von > 100 Doppelhüben. Diese hohe MEK-Beständigkeit deutet auf eine vollständige Vernetzung der Filmbildner hin.

Wenn das Beschichtungssystem eine Versiegelungsschicht aufweist, kann vorgesehen sein, dass die Versiegelungsschicht durch Trocknung der Versiegelung bzw. des Versiegelungslacks ausgebildet wird. Dabei kann vorgesehen sein, dass die Versiegelung im Spritz- Vernebelungs-, oder Tauchverfahren aufgebracht wird, insbesondere im Druckluftspritzverfahren. Auf diese Weise können fertige Produkte bzw. Bleche nach erfolgter Umformung und gegebenenfalls Schweißung besonders effektiv vor Korrosion geschützt werden.

Insbesondere kann vorgesehen sein, dass nach Auftragung der Versiegelung das Beschichtungssystem ausgehärtet wird. Wenn die Versiegelung ein wasserbasierter Flüssiglack ist, kann vermieden werden, dass es bei unvollständiger Trocknung während des Herstellungsverfahrens zur dauerhaften Freisetzung gesundheitsschädlicher Stoffe kommt. Vorzugsweise kann die Versiegelung bei einer Vernetzungstemperatur von 80 °C - 200 °C für 5 Min. - 25 Min. ausgehärtet werden. Dies erlaubt beispielsweise, dass die Aushärtung gleichzeitig mit der Aushärtung bzw. Trocknung einer möglicherweise auf die Außenseite des Hohlkörpers aufgebrachten Beschichtung erfolgt. Ein Überbrennen des Beschichtungssystems kann so vermieden werden. Vorzugsweise ist vorgesehen, dass das ausgehärtete Beschichtungssystem eine MEK-Beständigkeit von > 100 Doppelhüben aufweist.

Erfindungsgemäß ist auch ein Hohlkörper, insbesondere Heizkörper, wobei der Innenraum mit einem zuvor beschriebenen Beschichtungssystem und/oder erhalten durch ein zuvor beschriebenes Verfahren ausgekleidet ist, und/oder wobei der Hohlkörper aus einem zuvor beschriebenen Blech geformt ist, das derart angeordnet bzw. ausgeformt ist, dass das Beschichtungssystem den Innenraum auskleidet.

Die Bleche können beispielsweise durch Punktschweißen miteinander verbunden werden. Die Außenkanten werden üblicherweise durch Rollnahtschweißen erhalten. Abstandshalter und Anschlüsse, die gegebenenfalls durch die Herstellung ölig sein können, können durch Induktionsschweißen verbunden werden. Durch die gute Schweißeignung des Beschichtungssystems wird eine Beschädigung des Beschichtungssystems durch den Schweißprozess verhindert. Dadurch kann in weiterer Folge eine Korrosion des Hohlkörpers effektiv verhindert werden. Durch die verminderte Korrosion ist ein solcher Hohlkörper besonders beständig und weist eine hohe Produktlebensdauer auf. Wartungsarbeiten werden nur in geringem Umfang notwendig. Es ist auch möglich, aufgrund der guten Schweißeignung Wartungsarbeiten ohne Beschädigung des Hohlkörpers durchzuführen. Durch den erfindungsgemäßen Hohlkörper können daher sowohl bei der Herstellung, als auch beim Betrieb Kosteneinsparungen erzielt werden.

Erfindungsgemäß ist auch ein Verfahren zur Herstellung des Hohlkörpers durch Umformung der mit der Grundierungsschicht und der Deckschicht beschichteten Bleche, wobei anschließend eine Versiegelung zur Ausbildung der Versiegelungsschicht, insbesondere im Spritz-, Vernebelungs- oder Tauchverfahren, aufgebracht wird, und wobei vorzugsweise vorgesehen ist, dass das Beschichtungssystem erst nach Aufbringung der Versiegelung vollständig ausgehärtet wird. Dadurch kann die Korrosionsbeständigkeit des Hohlkörpers verbessert werden, da bei der Umformung entstandene Schäden an der Deckschicht und/oder der Grundierungsschicht durch die Versiegelungsschicht abgedeckt werden.

Die Versiegelungsschicht wird daher vorzugsweise anders als die Grundierungs- und Deckschicht nicht im kontinuierlichen Bandbeschichtungsprozess aufgebracht, sondern nach Herstellung des Hohlkörpers eingespritzt. Daher wird für die Versiegelung vorzugsweise Wasser als Lösungsmittel verwendet, um die Verarbeitung der Versiegelung einfach und sicher zu machen.

Eine besonders vorteilhafte Ausführungsform der Erfindung ist anhand der Figuren und Beispiele ohne Einschränkung des allgemeinen erfinderischen Gedankens beispielhaft dargestellt.
Fig. 1 zeigt einen Überblick über den vorliegenden Korrosionsmechanismus
Fig. 2 zeigt ein beispielhaftes erfindungsgemäßes Beschichtungssystem
Fig. 3 zeigt einen Überblick über das Herstellungsverfahren
Fig. 4a, b zeigen die Ergebnisse der Korrosionsprüfung im Salzsprühnebeltest
Fig. 5 zeigt die Korrosionsprüfung durch den Fast Corrosion Test
Fig. 6a, b zeigen das Ergebnis des Fast Corrosion Tests
Fig. 7a, b zeigen das Ergebnis eines Umformungstests

Fig. 1 zeigt den hauptsächlich vorliegenden Korrosionsmechanismus in offenen Heizkörpersystemen. Dargestellt ist ein Bereich eines herkömmlichen, bekannten Heizkörpers im Querschnitt. Der Heizkörper ist aus einem Stahlblech 1 gebildet. Im Innenraum 15 ist das Heizungsfluid 10 geführt. An der dem Außenbereich 16 zugewandten Außenseite des Stahlblechs 1 ist als Korrosionsschutz eine Phosphatierung 4 und ein Außenlack 5 aufgebracht. An der dem Innenraum 15 zugewandten Innenseite des Stahlblechs 1 haben sich Korrosionsprodukte 2 abgelagert. In offenen Heizkörpersystemen kommt es rasch zu Kalkablagerungen 3. Das Heizungsfluid 10 wirkt als Elektrolyt. An den Rändern der Kalkablagerungen 3 bildet sich eine Kathode 7 aus, unter den Kalkablagerungen 3 bildet sich eine Anode 6. Es kommt zu einer beginnenden Spaltkorrosion 8, die in weiterer Folge zu einer Lochbildung 9 führt. Die Korrosion setzt sich an der Außenseite des Stahlblechs 1 fort. Durch den Korrosionsschaden kommt es zu einem Austritt von Heizungsfluid 10 und zu einer Blasenbildung 11 unterhalb des Außenlacks 5. Ein Austausch des Heizkörpers ist daher erforderlich.

Fig. 2 zeigt ein beispielhaftes erfindungsgemäßes Beschichtungssystem auf einem kaltgewalzten und rekristallisierend geglühten und konversionsbehandelten Stahlband 21. Das Beschichtungssystem weist eine dem Stahlband 21 zugewandte Grundierungsschicht 22 auf, die einen Filmbildner und Korrosionsschutzpigmente 24 umfasst. Unmittelbar auf der Grundierungsschicht 22 ist eine Deckschicht 23 umfassend einen Filmbildner und Leitpartikel 25 angeordnet.

In der dargestellten Ausführungsform weisen die Grundierungsschicht 22 und die Deckschicht 23 jeweils eine Schichtdicke von ca. 2 µm auf. Als Filmbildner für die Grundierungsschicht 22 und die Deckschicht 23 ist jeweils ein isocyanidisch vernetztes Polymersystem auf Basis eines Phenolharzes mit Epoxid- und Melaminharz vorgesehen.

Die Grundierungsschicht 22 enthält ca. 17 Gew. % Korrosionsschutzpigmente 24. Als Korrosionsschutzpigmente 24 sind in der Grundierungsschicht 22 Zinkphosphat und ein Calcium - Ionen- ausgetauschtes Kieselsäure- bzw. Silica-Pigment enthalten.

Die Deckschicht 23 enthält als Leitpartikel 25 Graphit mit 12 Gew. % und einer Korngröße von d100 < 10 µm. Die Leitpartikel 25 ragen über das Niveau des Filmbildners hinaus (in Fig. 2 nicht dargestellt). Die Deckschicht 23 enthält zudem mitvernetzende Siloxane mit ca. 6 Gew. % als Hydrophobierungsmittel.

Zusätzlich kann über der Deckschicht 23 eine Versiegelungsschicht 26 angeordnet sein. Auch kann, unabhängig von der Versiegelungsschicht 26, unter der Grundierungsschicht 22 eine Konversionsschicht, beispielsweise enthaltend Titanfluoride, vorgesehen sein.

Zur Herstellung eines beispielhaften Beschichtungssystems kann folgendermaßen vorgegangen werden:

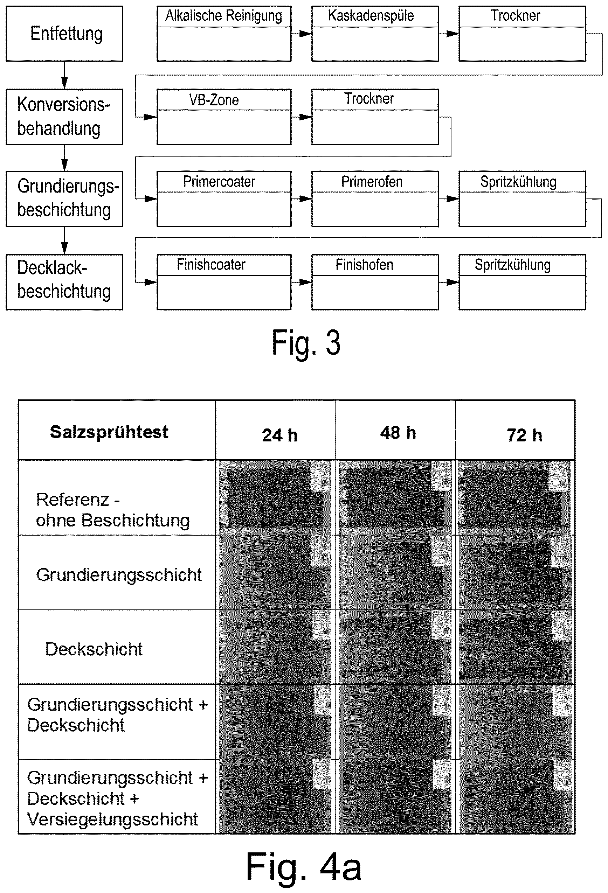

Fig. 3 zeigt einen Überblick über das Herstellungsverfahren. Zunächst wird im Coil-Coating-Verfahren die Grundierung und der Decklack aufgebracht. Dies geschieht in einem zweistufigen Prozess. Dabei werden die Grundierungsschicht 22 und die Deckschicht 23 teilvernetzt, so dass die Schichten 22,23 nicht vollständig ausgehärtet sind. Nicht gezeigt ist die optionale anschließende Aufbringung einer Versiegelung. Abschließend wird das Beschichtungssystem aus Grundierungsschicht 22, Deckschicht 23, und ggf. Versiegelungsschicht 26, ausgehärtet.

Im Detail kann dazu folgendermaßen vorgegangen werden:
Am Beginn des Beschichtungsprozesses wird das unbeschichtete Blech 21 alkalisch gereinigt um Öl, Staub und andere Verunreinigungen von der Bandoberfläche zu entfernen und einen einheitlichen Oberflächenzustand vor der Konversionsbehandlung zu erzielen.

Die Reinigerlösung (Ridoline C72 oder auch Bonderite C72, beides Fa. Henkel Surface Technologies) wird mittels Spritzbalken über Löffeldüsen auf die Bandoberfläche aufgebracht. Der Spritzdruck beträgt 2 bar, die Badtemperatur beträgt zwischen 55 °C - 60 °C. Die Reinigerkonzentration wird auf 8 - 12 Gesamtalkalität-Punkte eingestellt, bei zu erwartender starker Verschmutzung, z.B. bei geöltem Einlaufmaterial auf 11 - 14 Gesamtalkalität-Punkte. Die Gesamtalkalität-Punkte entsprechen dem Verbrauch in ml 0,1 N H₂SO₄ bei Titration bis pH 8,5 und 10 ml Probenvolumen und sind ein Maß für die OH⁻ Konzentration der Entfettungslösung.

Das Reinigungsbad wird in regelmäßigen Abständen neu angesetzt und in der Folge je nach Bedarf mit Reinigergranulat nachgeschärft. Verdunstungs - und Ausschleppungsverluste des Badvolumens werden mit deionisiertem, vollentsalztem (VE-) Wasser ergänzt.

Die Kontaktzeit Bandoberfläche - Reinigerlösung beträgt, je nach Bandgeschwindigkeit, nur wenige, beispielsweise 5 - 10, Sekunden. Nach Verlassen der Spritzreinigungszone wird der anhaftende Flüssigkeitsfilm abgequetscht, das gereinigte Band mit VE - Wasser bei Raumtemperatur für ca. 20 Sekunden gespült, erneut abgequetscht und mit Warmluft bei ca. 50°C für 1 - 2 Sekunden getrocknet.

Anschließend wird die Konversionsschicht aufgetragen. Dazu wird das Band mit einer Titanfluoride enthaltenden, chromfreien Vorbehandlung (Granodine 1455, auch GR 1455, Fa. Henkel) im Tauch - und Quetschverfahren bei einer Badtemperatur von 25 °C - 35 °C und einer Kontaktzeit von unter 5 s konversionsbehandelt. Die Kontaktzeit kann unabhängig von der Bandgeschwindigkeit durch bewegliche Führungsrollen geregelt werden. Bei höherer Bandgeschwindigkeit wird durch Absenken von Führungsrollen in das Tauchbad der durchlaufene Weg entsprechend länger. Die erzielten Titan - Auflagen betragen etwa 1 - 2 mg/m². Das Tauchbad wird als 1 - %ige Lösung des handelsüblichen Konzentrats GR 1455 angesetzt. Die Nachschärfung und Ergänzung des Bades erfolgt über eine Lösung, die Salpetersäure und konzentrierte GR 1455 enthält. Regelgröße ist der pH - Wert, der zwischen 3,1 und 3,5 gehalten werden soll. Anschließend wird mit Warmluft bei 35 °C für 1 - 2 s getrocknet.

Mittels 2 - Walzen - Rollcoater wird im nächsten Prozessschritt die Grundierung einseitig beispielsweise mit 2 µm Schichtdicke aufgetragen und im nachgeschalteten Primerofen eingebrannt. Der Primerofen ist ein Umluftofen. Das Band erreicht am Ende des Ofens Temperaturen von ca. 250 °C - 270 °C Peak Metal Temperature (PMT). Die Verweilzeit beträgt in Abhängigkeit von der Bandgeschwindigkeit zwischen 10 s bis 30 s. Unmittelbar nach dem Primerofen wird das Band in 1 - 2 Sekunden mit Spritzdüsen auf etwa 40 °C abgekühlt. Als Kühlmedium dient umlaufendes VE - Wasser.

Die Grundierungsschicht 22 basiert auf Phenolharz (und optional Epoxidharz und/oder Melaminharz) als Filmbildner mit Korrosionsschutzpigment 24 (s. Tabelle 1). Die Schichtdicke der Grundierungsschicht 22 beträgt ca. 2 µm und wird über die Nassfilmdicke eingestellt. Die Nassfilmdicke selbst kann über die Coater - Fahrweise (forward oder reverse) und die Abstände und Anpressdrucke der Coaterwalzen geregelt werden.

Im Anschluss wird analog zur Grundierungsschicht 22 mit dem Finishcoater der Decklack einseitig mit einer Schichtdicke von beispielsweise 2 µm aufgetragen. Die PMT am Ende des Finishofens beträgt ca. 260° - 270 °C, die Verweilzeit beträgt 10 s bis 30 s. Die Wasserkühlung nach dem Einbrennen des Decklacks ist identisch zur Kühlung nach Auftragung der Grundierung ausgeführt, wobei das Band in 1 - 2 Sekunden mit umlaufendem VE - Wasser aus Spritzdüsen auf etwa 40 °C abgekühlt wird. Die Deckschicht 23 basiert auf Phenolharz (und optional Epoxidharz) mit Leitpigment und Hydrophobierungsmittel (s. Tabelle 1). Die Schichtdicke der Deckschicht 23 wird auf etwa 2 µm eingestellt.

Der Schichtverbund aus der Grundierungsschicht 22 und der Deckschicht 23 wird in einem Prozess hergestellt, um die Haftung zwischen den Schichten zu gewährleisten.

Anschließend erfolgen wahlweise Folienkaschierung, Inspektion und Verpackung.

Anschließend werden Hohlkörper bzw. die Heizkörper aus den beschichteten Blechen gefertigt. Es handelt sich dabei um wasserführende Heizkörper, gefertigt aus Stahlblech 21 mit und ohne zusätzliche Konvektionsschächte. Zur Fertigung einer Platte für einen Plattenheizkörper können beispielsweise aus einem erfindungsgemäßen beschichteten Blech 21 zwei Plattenteile geformt werden, die durch Schweißen miteinander zu einer Platte verbunden werden. Die Plattenteile werden dabei üblicherweise so umgeformt, dass sie aufeinander folgende Erhebungen und Vertiefungen aufweisen. Üblich sind dabei Biegungen von ca. 90°. Die beiden umgeformten Plattenteile werden anschließend so verbunden, dass im Inneren Strömungskanäle für das Heizungsfluid bzw. -wasser entstehen, wobei die Plattenteile derart angeordnet sind, dass das Beschichtungssystem den Innenraum auskleidet. Dabei müssen die erfindungsgemäßen Materialen nachfolgende Prozesse durchlaufen und ohne signifikante Beschädigung überstehen: Zunächst erfolgt ein Umformen bzw. Prägen der beschichteten Bleche 21 zur Einbringung der Wasserkanäle. Anschließend werden die beschichteten Bleche 21 untereinander durch Punktschweißen verschweißt. Dabei wird die Schweißeignung kontrolliert, bzw. dürfen keine Schweißschäden wie z.B. Schweißspritzer sichtbar sein.

Danach werden die Heizkörper hergestellt, wobei je nach Bauform auch mehrere Platten verbunden werden können, und gegebenenfalls zusätzlich Konvektionsbleche angebracht werden. Die Heizkörper werden durch Rollnahtschweißen der Außenkanten und Induktionsschweißen von Abstandhaltern und Anschlüssen hergestellt, wobei Induktionsschweißen als Methode gewählt wird, da Anschlüsse herstellbedingt leicht ölig sein können. Die Heizkörper werden anschließend einer Druckdichtheitsprüfung mit Druckluft unter Wasser unterzogen.
Dabei kann die wasserbasierte Versiegelungsschicht 26 in den Heizkörper mittels Spritz-, Vernebelungs- oder Tauchverfahren eingebracht werden um allfällige Beschädigungen des Beschichtungssystems zu reparieren.

Es wird auf die Außenfläche des Heizkörpers eine Tauchgrundierung (beispielsweise eine Phosphatierung 4) bzw. eine Grundierung durch elektrophoretische Abscheidung aufgebracht und für 10 Minuten bei Objekttemperaturen bis 180 °C bzw. bei einer Umlufttemperatur von 240 °C eingebrannt. Danach erfolgt eine Pulverbeschichtung der Außenflächen und ein Einbrennen bei Objekttemperaturen bis 180 °C über eine Zeit von 10 Minuten (Umlufttemperatur: 240 °C). Erst bei diesen wiederholten Einbrennprozessen werden die mittels Bandbeschichtungsverfahren aufgebrachte Grundierungsschicht 22 und Deckschicht 23 vollständig vernetzt und ausgehärtet. Die zuvor eingestellte Teilvernetzung verhindert ein Überbrennen der einzelnen Filmbildner.

Eine beispielhafte Zusammensetzung der Lacke zur Ausbildung einer Grundierungsschicht 22, einer Deckschicht 23 sowie einer optionalen Versiegelungsschicht 26 ist in Tabelle 1a dargestellt.

Die genannten Rohstoffe sind in der angegebenen Menge zu vermengen, zu homogenisieren und auf das Blech 21 aufzutragen. Anschließend wird die Beschichtung wie angegeben eingebrannt, dabei verdampfen die flüchtigen Lösemittel. Vorzugsweise wird ein mit einer Konversionsschicht versehenes Stahlblech 21 verwendet.

Die Grundierungsschicht 22 wird auf das, ggf. konversionsbehandelte, Stahlblech 21, aufgetragen und eingebrannt. Dann wird die Deckschicht 23 auf die Grundierungsschicht 22 aufgebracht und eingebrannt. Optional kann dann eine zusätzliche Versiegelungsschicht 26 aufgebracht und ebenso eingebrannt werden.

**Tab. 1a: Beispielhafte Zusammensetzung des flüssigen Lackes in Gew.-%**

| Rohstoffbezeichungen | Grundierung | Decklack | Versiegelung |
|---|---|---|---|
| | | | |
| Phenodur PR 411/75B (Phenolharz) | 23,500 | 26,000 | - |
| Desmodur BL 3370/70 (Blockiertes Isocyanat) | 10,000 | 11,500 | - |
| PHENODUR PW 167 36WA (Hydro-Phenolharz) | - | - | 48,500 |
| VESTANAT EP-DS 1205, 42%ig TFO (Hydro-Blockiertes Isocyanat) | - | - | 17,750 |
| BYK 055 (Entschäumer) | 0,250 | 0,250 | - |
| BYK 333 (Benetzungsadditiv) | 0,250 | 0,250 | 0,100 |
| BYK-SILCLEAN 3720 (Hydrophobierung) | - | 2,000 | - |
| Aquacer 840 (Wachsdispersion) | - | - | 2,500 |
| BYK 024 (Entschäumer) | - | - | 0,500 |
| | | | |
| Shieldex 303 (Korrosionsschutzpigment) | 2,500 | - | 1,000 |
| Heucophos ZPA (Korrosionsschutzpigment) | 2,500 | - | - |
| Graphitpulver (fein) d_100 <10 µm (Leitpartikel) | - | 4,000 | - |
| | | | |
| Butyldiglykolacetat (Lösemittel) | 41,000 | 30,000 | - |
| Benzylalkohol (Lösemittel) | 20,000 | 26,000 | - |
| Wasser (Lösemittel) | - | - | 29,650 |
| | 100,000 | 100,000 | 100,000 |

In Tabelle 1b wird die Zusammensetzung der Grundierungsschicht, der Deckschicht und der Versiegelungsschicht aufgeführt, die durch Trocknung der in Tabelle 1a angegebenen Lacke ausgebildet werden:

**Tab. 1b: Beispielhafte Zusammensetzung des Trockenfilms in Gew.-%**

| Zusammensetzung | Grundierungsschicht | Deckschicht | Versiegelungsschicht |
|---|---|---|---|
| | | | |
| Filmbildner | 83,333 | 82,000 | 96,000 |
| | | | |
| Hydrophobierung | - | 5,882 | - |
| Korrosionsschutzpigment | 16,667 | - | 4,000 |
| Leitpartikel | - | 12,000 | - |
| | | | |
| | 100,000 | 100,000 | 100,000 |

Für die folgenden Beispiele wurden Proben nach dem oben beschriebenen Verfahren mit den oben beschriebenen Lacken beschichtet.

### Beispiel 1: Korrosionsbeständigkeit im Salzsprühnebeltest gemäß DIN EN ISO 9227

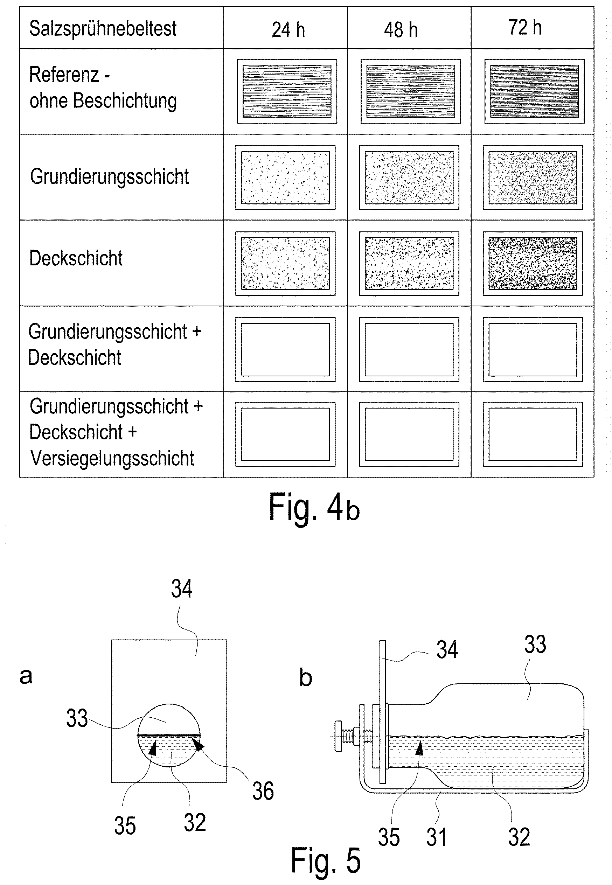

Für den Salzsprühnebeltest werden die Proben normgerecht in einem Testgerät positioniert (definierter Winkel, Probenabstand, etc.) und für die angegebene Zeit und mit einer genormten Salzlösung besprüht. Am Ende der Prüfdauer werden die an den Proben aufgetretenen Korrosionserscheinungen bewertet, z. B. nach Rostgrad, Blasengrad und korrosiver Unterwanderung organischer Beschichtungen. Die Ergebnisse dieses Tests sind in Tabelle 2 und Fig. 4 zusammengefasst.

Es zeigt sich eine deutlich verbesserte Korrosionsbeständigkeit des Beschichtungssystems gegenüber den Einzelschichten und der unbeschichteten Referenzprobe aus Stahl.

**Tab. 2 Ergebnisse Salzsprühnebeltest gemäß DIN EN ISO 9227**

| **Salzsprühnebeltest (SST)** | Rotrostgrad [%] | | |
|---|---|---|---|
| | 24 h | 48 h | 72 h |
| Referenz - ohne Beschichtung | 100 | 100 | 100 |
| Grundierungsschicht | 5 | 55 | 90 |
| Deckschicht | 35 | 75 | 95 |
| Grundierungsschicht + Deckschicht | 0 | 0 | 0 |
| Grundierungsschicht + Deckschicht + Versiegelungsschicht | 0 | 0 | 0 |

### Beispiel 2: Korrosionsbeständigkeit im Fast Corrosion Test

Es ist bekannt, dass der Salzsprühnebeltest selten mit dem Korrosionsverhalten in der natürlichen Umgebung übereinstimmt. Daher wurde der Fast Corrosion Test (FCT) entwickelt um die Korrosionsbelastung im Heizkörper optimal nachzustellen. Der Testaufbau ist in Fig. 5 dargestellt. Fig. 5a zeigt eine Probe 34 in Draufsicht. Der Bereich oberhalb der Borderline 35 ist im feuchten Gasraum 33 über dem Elektrolyten 32 gelagert, der untere Bereich ist im Elektrolyten 32 gelagert. Die Borderline 35 bildet die Grenzfläche zwischen Elektrolyt 32 und Gasraum 33. Fig. 5b zeigt ein Testgefäß 31 in Seitenansicht. Dabei wird die Probe 34 in dem Testgefäß 31 zu einem Teil in dem Elektrolyten 32 gelagert, der andere Teil ragt aus der Elektrolytlösung 32 in den Gasraum 33 des Testgefäßes 31. Im Detail ist der Test beschrieben in:
K.-H. Stellnberger, "Neue Korrosionsprüfungen für Verklebungen und Lackierungen in der Automobilindustrie" DECHEMA-Tagung, 28.2.2012, Frankfurt
K.-H. Stellnberger, "Neue Korrosionsprüfungen für Verklebungen und Lackierungen in der Automobilindustrie" Sonderheft, Adhesion 2012
K.-H. Stellnberger, "Korrosionsprüfung am Automobil, neue Trends in der Branche" Springer Verlag, BHM Berg- und Hüttenmännische Monatshefte, 7/2018)

Als Elektrolyt 32 wurde kalkhaltiges Wasser (mit 20° deutscher Härte) bei 65 °C statt der literaturgemäßen 5 %igen-NaCl-Prüflösung bei 30°C verwendet und jeden Tag durch frisches, sauerstoffgesättigtes Wasser ersetzt. Der Gasraum 33 wurde mit Sauerstoff gefüllt. Wenn das Heizungssystem über die Sommermonate (teil-)entleert wird, kann es an der Wasserlinie (Grenzfläche, Borderline 35) zu Korrosions-Mischformen kommen, die ebenfalls in diesem Test abgebildet werden. 3 Wochen FCT entsprechen der Heizkörper-Belastung im offenen Heizungssystem von etwa 10 Jahren.

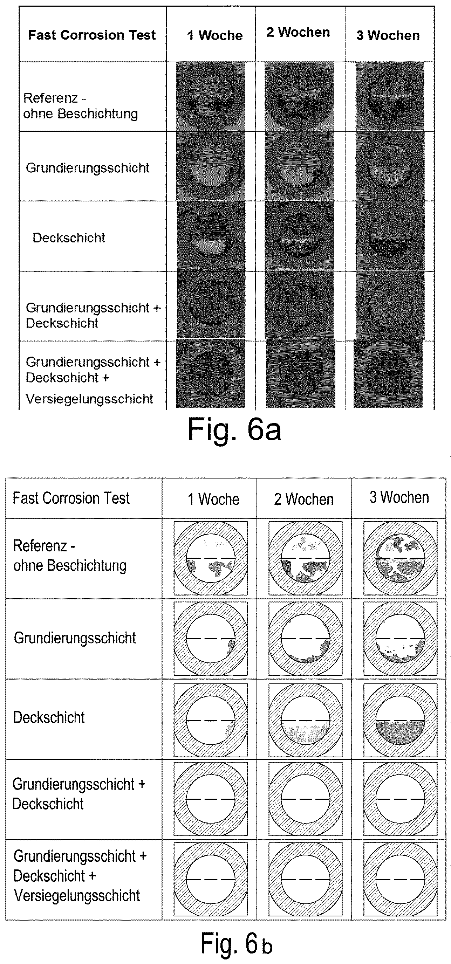

In diesem Test zeigt sich die Überlegenheit des Beschichtungssystems gegenüber den einzelnen Schichten und der Referenz noch deutlicher. Die Ergebnisse sind in Tabelle 3 und Fig. 6 dargestellt.
Das erfindungsgemäße Beschichtungssystem ist der Referenz deutlich überlegen. Im Elektrolyt 32 kommt es auch nach 3 Wochen FCT zu keiner Rotrostbildung, auch die Borderline 35 ist frei von Korrosionserscheinungen.

**Tab. 3 Ergebnisse Fast Corrosion Test**

| **Fast Corrosion Test (FCT)** | | Rotrostgrad [%] | | |
|---|---|---|---|---|
| | | 1 Woche | 2 Wochen | 3 Wochen |
| Referenz - ohne Beschichtung | über Elektrolyt | 12 | 25 | 53 |
| | im Elektrolyt | 55 | 90 | 100 |
| Grundierungsschicht | über Elektrolyt | 0 | 0 | 0 |
| | im Elektrolyt | 6 | 23 | 44 |
| Deckschicht | über Elektrolyt | 0 | 0 | 0 |
| | im Elektrolyt | 7 | 82 | 100 |
| Grundierungsschicht + Deckschicht | über Elektrolyt | 0 | 0 | 0 |
| | im Elektrolyt | 0 | 0 | 0 |
| Grundierungsschicht + Deckschicht + Versiegelungsschicht | über Elektrolyt | 0 | 0 | 0 |
| | im Elektrolyt | 0 | 0 | 0 |

### Beispiel 3: Umformbarkeit

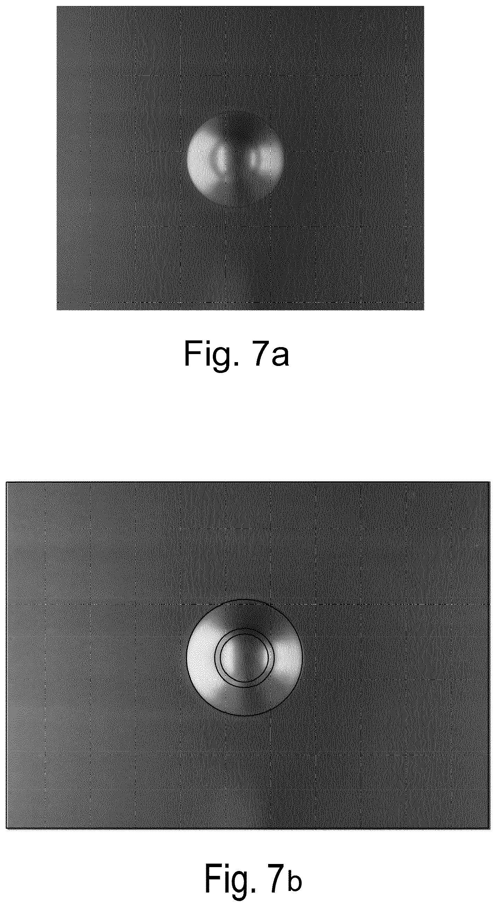

Fig. 7 zeigt die gute Umformbarkeit des Beschichtungssystems aus Grundierungsschicht 22, Deckschicht 23 und Versiegelungsschicht 26 nach Durchführung der Tiefungsprüfung (6 mm Tiefung, bzw. Erichsen-Umformung) gemäß DIN ISO 1520:2006. Die "gute Umformbarkeit" ist dadurch gekennzeichnet, dass die vorgeschriebene Tiefung von 6 mm erreicht wird, ohne dass die Beschichtung Risse bekommt oder sich vom Substrat ablöst.

### Beispiel 4: Schweißeignung

Das Beschichtungssystem ist gemäß DVS-Merkblatt 2902-2 "gut punktschweißgeeignet". Während des Schweißprozesses kam es zu keinen Blitzen, Spritzern oder sonstigen Schweißschäden an den Blechen und Elektroden. Die Schweißpunkte waren dicht. Dies ist ausgesprochen selten für organisch beschichtete Stahlbleche.

Im Versuch lag der Schweißbereich zwischen 6,3 kA und 7,9 kA, der allgemein empfohlene Schweißbereich von mindestens 1,5 kA konnte erreicht werden. Der Schweißwiderstand sollte unter 100 mOhm sein, im Versuch wurden Schweißwiderstände zwischen 26 mOhm bis 97 mOhm erzielt.

### Bezugszeichenliste

1 Stahlblech, insbesondere konversionsbehandeltes Stahlblech
2 Korrosionsprodukte
3 Kalkablagerung
4 Phosphatierung (Außenseite)
5 Lackierung (Außenseite)
6 Kathode (seitlich der Kalkablagerung)
7 Anode (bildet sich unter der Kalkablagerung aus)
8 Beginn Spaltkorrosion
9 Lochbildung
10 Heizungswasser (Elektrolyt)
11 Austritt von Heizungswasser (Blasenfüllung)

15 Heizkörperinnenseite (dem Heizwasser zugewandt)
16 Heizkörperaußenseite

21 Stahlblech, insbesondere konversionsbehandeltes Stahlblech
22 Grundierungsschicht
23 Deckschicht
24 Korrosionsschutzpigment
25 Leitpartikel
26 optionale Versiegelungsschicht

31 Testgefäß
32 Elektrolyt (kalkhaltiges Wasser)
33 Gasraum
34 Probe (beschichtetes Stahlblech)
35 Borderline, Grenzfläche Elektrolyt/Gasraum

## Patentansprüche

1. Beschichtungssystem für Bleche umfassend
- eine Grundierungsschicht umfassend zumindest einen Filmbildner und zumindest einen Korrosionsinhibitor und
- eine unmittelbar auf der Grundierungsschicht angeordnete Deckschicht umfassend zumindest einen Filmbildner und zumindest einen Leitpartikel.

2. Beschichtungssystem nach Anspruch 1, **dadurch gekennzeichnet, dass** die Grundierungsschicht eine Schichtdicke von maximal 10 µm, insbesondere 0,5 µm - 4 µm, vorzugsweise 1 µm - 2 µm, aufweist,
und/oder
dass die Grundierungsschicht als Korrosionsinhibitor zumindest ein Korrosionsschutzpigment enthält, insbesondere Zinkphosphat und/oder ein ionenausgetauschtes, vorzugsweise Calcium-lonenausgetauschtes, Kieselsäure- bzw. Silica-Pigment,
und/oder
dass die Grundierungsschicht 3 Gew. % - 60 Gew. %, insbesondere 5 Gew. % - 40 Gew. %, vorzugsweise 10 Gw. % - 20 Gew. %, Korrosionsschutzpigmente umfasst.

3. Beschichtungssystem nach Anspruch 1 oder 2, **dadurch gekennzeichnet, dass** die Grundierungsschicht als Filmbildner ein, insbesondere cyanidisch vernetztes, Polymersystem auf Basis eines Phenolharzes umfasst, wobei zusätzlich ein Epoxidharz und/oder ein Melaminharz, umfasst ist.

4. Beschichtungssystem nach einem der Ansprüche 1 bis 3, **dadurch gekennzeichnet, dass** die Deckschicht eine Schichtdicke von maximal 10 µm, insbesondere 0,5 µm - 4 µm, vorzugsweise 1 µm - 2 µm, aufweist,
und/oder
dass die Deckschicht kohlenstoffhaltige Leitpartikel aufweist, insbesondere Graphit, vorzugsweise mit einer Korngröße von d100 < 10 µm,
und/oder,
dass die Deckschicht 1 Gew% - 40 Gew%, insbesondere 2 Gew% - 30 Gew%, vorzugsweise 3 Gew% - 15 Gew%, Leitpartikel aufweist.

5. Beschichtungssystem nach einem der Ansprüche 1 bis 4, **dadurch gekennzeichnet, dass** die Deckschicht als Filmbildner ein, insbesondere cyanidisch vernetztes, Polymersystem auf Basis eines Phenolharzes umfasst, wobei zusätzlich ein Epoxidharz und/oder ein Melaminharz, umfasst ist,
und/oder
dass die Deckschicht ein Hydrophobierungsmittel umfasst, insbesondere ein oder mehrere Verbindungen ausgewählt aus der Gruppe der Siloxane, vorzugsweise mitvernetzende Siloxane, wobei insbesondere vorgesehen ist, dass das Hydrophobierungsmittel in einer Menge von 0,1 Gew% - 10 Gew% bezogen auf die Deckschicht enthalten ist.

6. Beschichtungssystem nach einem der Ansprüche 1 bis 5, **dadurch gekennzeichnet, dass** unter der Grundierungsschicht eine Konversionsschicht angeordnet ist, wobei insbesondere vorgesehen ist, dass die Konversionsschicht chromfrei ist, und vorzugsweise Titanfluoride enthält.

7. Beschichtungssystem nach einem der Ansprüche 1 bis 6, **dadurch gekennzeichnet, dass** direkt auf der Deckschicht eine Versiegelungsschicht angeordnet ist, wobei die Versiegelungsschicht zumindest einen Filmbildner umfasst, wobei insbesondere vorgesehen ist, dass die Versiegelungsschicht als Filmbildner ein, insbesondere cyanidisch vernetztes, Polymersystem auf Basis eines Phenolharzes umfasst, wobei zusätzlich ein Epoxidharz und/oder ein Melaminharz und/oder ein Polyesterharz, umfasst ist.

8. Beschichtungssystem nach Anspruch 7, **dadurch gekennzeichnet, dass** die Versiegelungsschicht ein Hydrophobierungsmittel umfasst, insbesondere ein oder mehrere Verbindungen ausgewählt aus der Gruppe der Siloxane
und/oder
dass die Versiegelungsschicht einen Korrosionsinhibitor aufweist, insbesondere Zinkphosphat und/oder ein ionenausgetauschtes, vorzugsweise Calcium-Ionenausgetauschtes, Silica-Pigment.

9. Beschichtungssystem nach einem der Ansprüche 7 oder 8, **dadurch gekennzeichnet, dass** die Versiegelungsschicht eine Filmdicke von 0,5 µm - 20 µm, insbesondere 3 µm - 20 µm, aufweist,
und/oder dass das Beschichtungssystem umfassend die Grundierungsschicht, die Deckschicht und die Versiegelungsschicht eine Filmdicke von 1,5 µm bis 30 µm aufweist.

10. Blech beschichtet mit einem Beschichtungssystem nach einem der Ansprüche 1 bis 9, wobei das Blech zumindest einseitig beschichtet ist, wobei die Grundierungsschicht dem Blech zugewandt ist, und wobei insbesondere vorgesehen ist, dass das Blech ein, vorzugsweise geglühtes und unverzinktes, Stahlblech ist.

11. Verfahren zur Beschichtung eines Blechs, insbesondere nach Anspruch 10, mit einem Beschichtungssystem nach einem der Ansprüche 1 - 9, wobei zur Ausbildung der Grundierungsschicht eine Grundierung und zur Ausbildung der Deckschicht ein Decklack im Bandbeschichtungsverfahren aufgebracht werden.

12. Verfahren nach Anspruch 11, wobei im Bandbeschichtungsverfahren die Filmbildner teilvernetzt werden, wobei insbesondere vorgesehen ist,
dass die Grundierungsschicht für 10 s - 40 s, insbesondere 10 s - 30 s, und einer Peak Metal Temperature von 220 °C - 290 °C, insbesondere 230 °C - 270 °C, eingebrannt wird, und/oder dass die Deckschicht für 10 s - 40 s, insbesondere 10 s - 30 s, und einer Peak Metal Temperature von 220 °C - 280 °C, insbesondere 230 °C - 270 °C eingebrannt wird.

13. Verfahren nach einem der Ansprüche 11 oder 12, wobei das Beschichtungssystem eine Versiegelungsschicht aufweist und zur Ausbildung der Versiegelungsschicht eine Versiegelung im Spritzverfahren aufgebracht wird, insbesondere im Druckluftspritzverfahren, wobei insbesondere vorgesehen ist, dass nach Auftragung der Versiegelung das Beschichtungssystem ausgehärtet wird, vorzugsweise für 5 Min. - 25. Min. und 80 °C - 200 °C Objekttemperatur.

14. Hohlkörper, insbesondere Heizkörper, wobei der Innenraum mit einem Beschichtungssystem nach einem der Ansprüche 1 bis 9 und/oder erhalten durch ein Verfahren nach einem der Ansprüche 11 bis 13 ausgekleidet ist, und/oder wobei der Hohlkörper aus einem Blech nach Anspruch 10 geformt ist, das derart angeordnet bzw. ausgeformt ist, dass das Beschichtungssystem den Innenraum auskleidet.

15. Verfahren zur Herstellung eines Hohlkörpers nach Anspruch 14, wobei der Hohlkörper durch Umformung von mit der Grundierungsschicht und der Deckschicht beschichtetem Blech ausgebildet wird und anschließend zur Ausbildung der Versiegelungsschicht eine Versiegelung, insbesondere im Spritz- oder Tauchverfahren, aufgebracht wird, wobei vorzugsweise vorgesehen ist, dass das Beschichtungssystem nach Aufbringung der Versiegelungsschicht ausgehärtet wird.
